# EUROPÄISCHE PATENTSCHRIFT

(11) **EP 0 520 047 B1**
(45) Veröffentlichungstag und Bekanntmachung des Hinweises auf die Patenterteilung: **05.10.1994**
(21) Anmeldenummer: 91920746.4
(22) Anmeldetag: 04.12.1991
(51) Int. Cl.: B60T 8/36

(54) **ELEKTROHYDRAULISCHE DRUCKREGELVORRICHTUNG**
ELECTROHYDRAULIC PRESSURE REGULATOR
REGULATEUR ELECTROHYDRAULIQUE DE PRESSION

(30) Priorität: 15.01.1991 DE 4100967; 11.10.1991 DE 4133641
(43) Veröffentlichungstag der Anmeldung: 30.12.1992
(73) Patentinhaber: ITT Automotive Europe GmbH, 60488 Frankfurt (DE)
(72) Erfinder: BURGDORF, Jochen, D-6050 Offenbach-Rumpenheim (DE); LORECK, Heinz, D-6270 Idstein 2 (DE); VOLZ, Peter, D-6100 Darmstadt (DE)
(86) Internationale Anmeldenummer: EP9102309
(87) Internationale Veröffentlichungsnummer: WO9212878

(56) Entgegenhaltungen:
- EP-A- 0 105 219
- WO-A-89/10286
- DE-A- 3 742 320
- DE-A- 4 001 017
- DE-U- 8 910 805
- FR-A- 2 637 348

## Beschreibung

Die Erfindung betrifft eine elektrohydraulische Druckregelvorrichtung, insbesondere Bremsdruckregelvorrichtung nach dem Oberbegriff des Anspruchs 1 oder des Anspruchs 9.

Es sind bereits elektrohydraulische Druckregelvorrichtungen bekannt, bei denen der Deckel oder zumindest ein Teil des Deckels als elektronischer Regler ausgebildet ist. Hierzu wird beispielhaft auf die Ausführungsvarianten der internationalen Veröffentlichung WO 89/10286 verwiesen, wonach über die bereits hinreichend bekannte Blockbauweise des Ventilaufnahmekörpers hinaus der Deckel mittels eines plattenförmigen Trägerelementes unterteilt ist, um einerseits den elektronischen Regler aufzunehmen, andererseits die elektrische Verbindung zwischen dem elektronischen Regler und den an den Elektromagnetventilen überstehenden Kontaktelementen herzustellen. Die Spulen der Elektromagnetventile sowie der Deckel sind nacheinander auf die Ventildome des Ventilaufnahmekörpers aufgesteckt, wobei zur Herstellung des elektrischen Anschlusses zwischen den Kontaktelementen und dem im Deckel integrierten elektronischen Regler Steckkontakte ineinandergreifen.

Die vorbeschriebene Druckregelvorrichtung kann bezüglich der Herstellung, Funktionsprüfung und Montage nicht als besonders vorteilhaft angesehen werden, da zur Herstellung äußerst eng tolerierte Passungsspiele zum Zusammenfügen und Anschließen der Spulen an den Elektronikteil des Deckels erforderlich sind, die Funktionsprüfung des Elektronikteils bei abgetrenntem Hydraulikteil infolge der fehlenden Spulen erschwert ist und ferner die Montage durch die Steifigkeit der zueinander auszurichtenden Bauteile in Abhängigkeit der vorgenannten Herstellpräzision erschwert ist. Des weiteren können unterschiedliche Betriebstemperaturen und damit Wärmedehnungen zwischen den einzelnen Bauteilen zu unerwünschten mechanischen Spannungen führen, die es zu verhindern gilt.

Es ist auch bereits bekannt, einen derartigen Ventilblock, der für eine geregelte Bremsanlage vorgesehen ist, mit den zugehörigen elektronischen Schaltungen bzw. mit dem elektronischen Steuergerät zu einer Montageeinheit zusammenzufügen. Hierzu wird der eigentliche Ventilblock, der sich hauptsächlich aus dem Ventilaufnahmekörper, den Ventilen und den Ventilspulen zusammensetzt, durch eine Kontaktstift-Kontakthülsen-Verbindung trennbar mit dem elektronischen Steuergerät verbunden (DE-A-40 01 017 A1, offenbart am 18.07.91).

Es ist die Aufgabe der Erfindung, die aus dem genannten Stand der Technik bekannten Druckregelvorrichtungen zu verbessern, um eine kompakte sowie funktionsoptimierte Druckregelvorrichtung zu schaffen, die möglichst einfach herzustellen, zu prüfen und zu montieren ist, wobei unterschiedliche Wärmedehnungen der Bauteile möglichst spannungsfrei aufgenommen werden sollen, und ein Verfahren zur Herstellung einer solchen Druckregelvorrichtung anzugeben.

Diese Aufgabe wird erfindungsgemäß durch die kennzeichnenden Merkmale der Patentansprüche 1 und 9 gelöst, sowie durch ein Verfahren zur Herstellung einer solchen Druckregelvorrichtung nach den kennzeichnenden Merkmalen des Patentanspruchs 15.

In einer bevorzugten Ausgestaltung der Erfindung gemäß dem Anspruch 2 ist vorgesehen, daß das Trägerelement mit Öffnungen versehen ist, die von den hervorstehenden Kontaktelementen der Spulen durchdrungen sind, wobei es vorteilhaft ist, die lichte Weite der Öffnungen größer zu gestalten als das Außenmaß der Kontaktelemente. Damit ist eine der Voraussetzungen erfüllt, die eine einfache Ausrichtung und Befestigung der Bauteile zueinander sowie eine ungehinderte Wärmeausdehnung der Teile ermöglicht.

Zur Unterdrückung von elektromagnetischen Störfeldern während der Ventilschaltphasen ist gemäß den Merkmalen der Ansprüche 3 und 4 vorgesehen, eine Abschirmung im Bereich des Trägerelementes und des elektronischen Reglers anzuordnen, die vorzugsweise die Form einer Platte aufweist. Die Abschirmung kann auf der Ober- und/oder Unterseite oder auch im Trägerelement angeordnet sein.

Eine weitere Konkretisierung zur Befestigung der Spulen am Trägerelement geht aus den Merkmalen des Anspruchs 5 hervor, wonach die elastische Halterung aus einer reibschlüssig und/oder formschlüssig zwischen der Öffnung des Trägerelementes und den Kontaktelementen eingefügten Stopfbuchse gebildet ist.

Weitere alternative Ausführungsformen zur elastischen Befestigung und elektrischen Kontaktierung der Spulen am Trägerelement sind den Ansprüchen 6 und 7 zu entnehmen, wonach mehrere elastische Halterungen vorgesehen sind, die als homogener Bestandteil des Trägerelementes axial und radial verlagerbar, die vorzugsweise an den Mantelflächen der Spulen angreifen, wobei ferner die Halterungen zur Aufnahme der Stromleiter genutzt werden können. Ebenso ist es gemäß Anspruch 8 möglich, die elastischen Halterungen als die Spulen umgreifende Federelemente auszubilden, die separat am Trägerelement befestigt werden können. Hierdurch können etwaig bestehende Passungstoleranzen zwischen Ventilaufnahmekörper und den im Deckel elastisch aufgehängten Spulen ausgeglichen werden.

Gemäß der Fortgestaltung des Erfindungsgegenstandes ist nach Anspruch 9 vorgesehen, daß die Ventilspulen in dem Deckel mit Hilfe eines elastischen Formkörpers oder einer elastischen Masse in einer der Ventilanordnung entsprechenden Weise positioniert und gehalten sind.

Durch die Positionierung und Halterung der Ventilspulen in dem Deckel bzw. Gehäuse wird es möglich, im Herstellungsprozeß zunächst die Spulen mit der Elektronik zu verdrahten und danach dieses fertige Bauteil auf den Ventilaufnahmekörper bzw. auf die Ventilgehäuse aufzusetzen. Ein Lösen dieser kompletten, aus den Spulen und der Elektronik bestehenden Einheit von dem Ventilblock, z.B. zur Überprüfung oder zur Reparatur, ist ebenfalls mit einem einfachen Handgriff möglich, weil keine elektrischen Anschlüsse getrennt werden müssen. Bei der Verbindung zwischen dem Ventilblock und den Ventilspulen handelt es sich gewissermaßen um einen "magnetischen Stecker".

Durch die Elastizität des Formkörpers, der die Ventilspulen positioniert und hält, werden beim Zusammenfügen Toleranzen ausgeglichen, so daß keine zu hohen mechanischen Spannungen zwischen den Ventilgehäusen und den Ventilspulen entstehen können. Durch flexible Anschlußleitungen, die die Spulen mit der Elektronik verbinden, wird auch ein mehrfaches Zusammenfügen und Lösen des magnetischen Steckers möglich, ohne daß die Verbindungen schadhaft werden können.

Nach dem Zusammenfügen des Deckels und des Ventilaufnahmekörpers umgeben die einzelnen Ventilspulen die zugehörigen Ventildome und gelangen mit einer Stirnseite auf der Grundfläche des Ventilaufnahmekörpers zur Auflage.

Nach einer vorteilhaften Ausführungsart der Erfindung ist der elastische Formkörper oder die elastische Masse derart ausgebildet, daß eine Abdichtung zwischen dem Deckelrand und dem Ventilaufnahmekörper beim Aufstecken des Deckels auf den Ventilblock und eine Anpreßkraft, die für einen festen Sitz der Spule auf dem Ventilaufnahmekörper Sorge trägt, entstehen. Dadurch wird die Ausbildung eines Luftspaltes am Ventilsitz, d.h. zwischen der aufsitzenden Stirnseite der Spule und dem Ventilaufnahmekörper, verhindert.

Der Formkörper kann gemäß einer vorteilhaften Ausführungsart der Erfindung vorgefertigt und derart ausgebildet sein, daß er vor dem Einsetzen der Ventilspulen in das Gehäuse eingelegt werden kann. Zweckmäßig ist es, in den Formkörper Hohlräume einzubringen, um die Elastizität und ggfs. auch eine geringfügige Plastizität des Formkörpers zu erhöhen oder um Gewicht und Material einzusparen.

Ein Verfahren zur Hersteilung der erfindungsgemäßen Druckregelvorrichtung besteht darin, daß mit einer Hilfsvorrichtung zunächst die Ventilspulen in dem Deckel bzw. in dem Gehäuse positioniert, befestigt und mit nach außen führenden elektrischen Anschlüssen versehen werden und daß dann eine elastische Masse zur Ausbildung des elastischen Formkörpers eingegossen wird. Durch eine entsprechende Form können dabei auch die zuvor genannten Hohlräume in dem Formkörper hervorgerufen werden.

Weitere Merkmale, Vorteile und Anwendungsmöglichkeiten gehen aus der folgenden Darstellung mehrerer Ausführungsbeispiels der Erfindung anhand der beigefügten Abbildungen hervor.

Es zeigen
- Figur 1: einen Teilschnitt in der Seitenansicht durch eine Druckregelvorrichtung,
- Figur 2: einen Längsschnitt durch den Deckel einer Druckregelvorrichtung,
- Figur 3: eine Darstellung zur Halterung einer Spule in perspektivischer Ansicht,
- Figur 4: im Schnitt und in schematisch vereinfachter Teildarstellung eine Druckregelvorrichtung nach der Erfindung und
- Figur 5: im Schnitt senkrecht zu der Darstellung nach Fig. 4 einen vorgefertigten Formkörper für eine Druckregelvorrichtung nach der Erfindung.

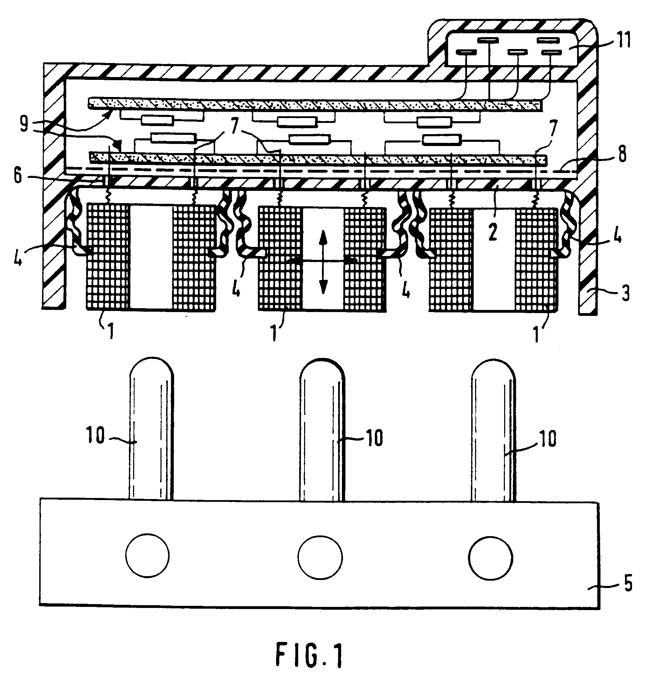

Die Figur 1 zeigt eine Seitenansicht der erfindungsgemäßen Druckregelvorrichtung mit einer Skizzierung der Grundkomponenten. Die dargestellte Druckregelvorrichtung besteht aus einem im Profilschnitt gezeigten Deckel 3 und einem blockförmigen, aus Stahl oder Leichtmetall gefertigten Ventilaufnahmekörper 5. Der Deckel 3 nimmt in Längsrichtung eine als Trägerelement 2 bezeichnete horizontale Trennwand auf, die den Deckel 3 versteifend in zwei Bereiche unterteilt. Im geschlossenen, oberen abbildungsgemäßen Bereich des Deckels 3 befindet sich der elektronische Regler 9, dessen Hauptbestandteile durch die Darstellung einer bedruckten, mit Widerständen und Transistoren versehene Leiterplatte bzw. Keramikleiterplatte oder Leiterfolie schemenhaft gezeigt sind. Zwischen dem elektronischen Regler 9 und dem Trägerelement 2 befindet sich eine gegen elektromagnetische Störfelder wirksame Abschirmung 8, die in ihrer baulichen Ausführung an das abgestrahlte Frequenzfeld der Spulen 1 angepaßt ist. Daher ist die Abschirmung 8 als nicht näher präzisiertes Bauteil angedeutet. Die Abschirmung 8 kann durch metallisches Bedampfen, Bedrucken, aus gefüllten Polymerwerkstoffen oder metallischen Platten hergestellt werden. Das Trägerelement 2 ist mit Öffnungen 6 versehen, die in ihrer Anordnung der räumlichen Verteilung der Spulen 1 auf dem Ventilaufnahmekörper 5 entsprechen. Die Spulen 1, die in der Zeichnung im unteren Bereich des Deckels 2 angeordnet sind, ragen jeweils mit den paarweise jeder Spule 1 zugeordneten Kontaktelementen 7 durch die Öffnungen 6 des Trägerelementes 2. Die Öffnungen 6 sind bei Verwendung relativ steifer Kontaktelemente 7 großzügig dimensioniert, um den Kontaktelementen 7 eine ungehinderte seitliche Bewegungsfreiheit zu gewähren. Hingegen kann bei Verwendung von elastischen Kontakelementen auf die relativ großen Öffnungen verzichtet werden. Bei groß dimensionierten Öffnungen 6 wird der Spielraum zur Anordnung von elastischen Halterungen 4 verwendet, die beispielsweise als Stopfbuchsen ausgeführt sind und die die Spulen 1 im Trägerelement 2 beweglich verankern. Die Enden der Kontaktelemente 7 durchdringen die Abschirmung 8 und sind mit der darüber befindlichen, den elektronischen Regler 9 aufnehmende Leiterplatte bzw. Keramikplatte oder Leiterfolie vorzugsweise verlötet. Eine besonders komprimierte, leistungsfähige elektronische Einheit erhält man bei Verwendung von Leiterfolien, die infolge ihrer Flexibilität mittel Filmscharniere übereinander klappbar besonders wenig Raum beanspruchen. Aus der Abbildung gehen spezielle elastische Halterungen 4 hervor, die, vereinigt mit dem aus Spritzguß hergestellten Kunststoffdeckel zu einer homogenen, federnden Einheit führen, wobei die Halterungen 4 mit ihren federnden Schenkeln an den Mantelflächen der Spulen 1 angreifen. Durch die elastische Umklammerung der Spulen 1 am Deckel 2 ist die Voraussetzung für eine ungehinderte radiale sowie axiale Ausrichtung der Spulen 1 gegenüber den Ventildomen 10 des Ventilaufnahmekörpers 5 gewährleistet. Weiterhin ist es möglich, durch in den Halterungen 4 wirksame Federkräfte eine definierte axiale Anpressung der Spulen 1 auf den Ventilaufnahmekörper 5 auszuüben. Gleichzeitig bleiben infolge der vorbeschriebenen Aufhängungen der Spulen 1 im Deckel 2 die Kontaktelemente 7 zugentlastet, so daß auf die Verwendung relativ steifer Kontaktelemente 7 verzichtet werden kann, womit auch die Anordnung von stopfbuchsenartigen Halterungen und die hierzu relativ groß dimensionierten Öffnungen 6 im Trägerelement 2 und dessen elastisches Abdichten mittels Vergußmasse entfallen können. Durch die Trennung der Bauteile nach hydraulischen und elektronischen Funktionsgruppen erfolgt eine voneinander unabhängige Funktionsprüfung und gegebenenfalls zum Zwecke einer einfachen, kostengünstigen Instandsetzung ein Baugruppenaustausch. Die elektrischen Steckeranschlüsse 11 der Druckregelvorrichtung befinden sich - wie dies bereits aus dem Stand der Technik bekannt ist - vorzugsweise als Messerleiste ausgeführt im Deckel 2, um die Stromversorgung zwischen der Energiequelle und dem elektronischen Regler 9 herzustellen.

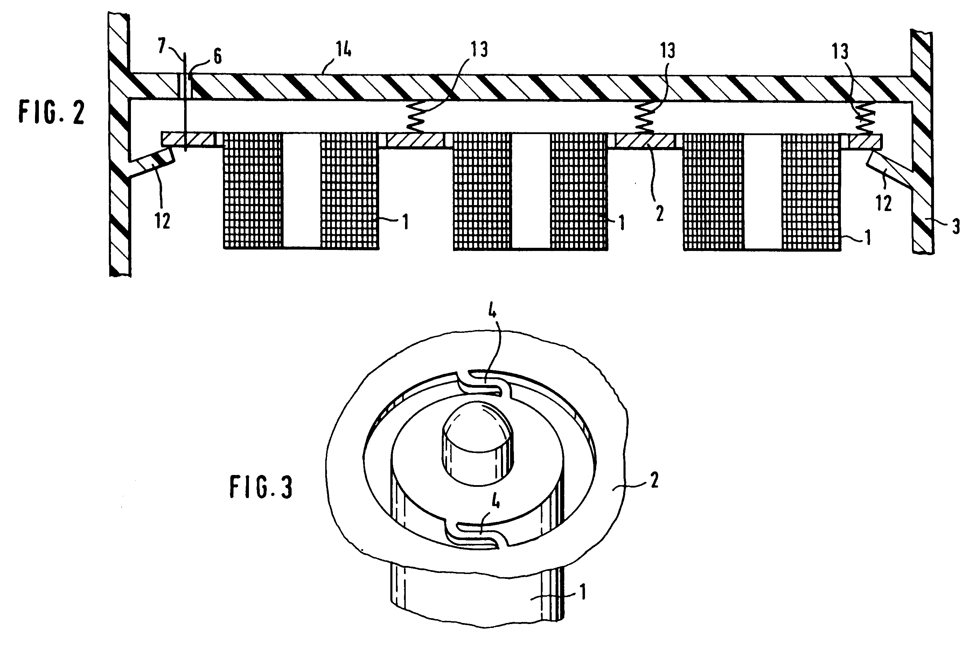

Alternativ zur Figur 1 zeigt die Figur 2 abschnittsweise einen Längsschnitt durch den Deckel 3, dessen Seitenwände mit Nasen 12 versehen sind, an denen ein beweglich geführtes Trägerelement 2 unter Einwirkung von Federelementen 13 einschnappt und begrenzt in der Lage veränderbar gehalten ist. Die Federelemente 13 stützen sich auf der dem Trägerelement 2 abgewandten parallelen Zwischenwand 14 des Deckels 3 ab, welche eine Öffnung 6 zur im Trägerelement 2 geführten elektrischen Verbindung der Spulen 1 mit dem elektronischen Regler aufweisen. Die Öffnung 6 ist entweder elastisch abgedichtet, um bei Verwendung von starren Kontaktelementen 7 eine begrenzt freie Beweglichkeit des Trägerelementes 2 gegenüber dem Deckel 3 zuzulassen, oder es stellen alternativ elastische Kontaktelemente 7 die Verbindung zwischen den im Trägerelement 2 gehaltenen Spulen 1 und dem elektronischen Regler her. Durch die gezeigte Ausführungsform ist infolge des Erfordernisses von lediglich einer Öffnung 6 in der den Ventilblock vom elektronischen Regler trennenden Zwischenwand 14 eine besonders gute Abdichtung gewährleistet, ohne die freie Beweglichkeit der Spulen 1 einschränken zu müssen.

Eine weitere vorteilhafte Ausführungsform zum Erfindungsgegenstand geht aus der Beschreibung von Figur 3 hervor. Die Figur 3 zeigt abschnittsweise eine räumliche Ansicht basierend auf eine Abwandlung des Gegenstandes nach Figur 2, wonach exemplarisch dargestellt eine Spule 1 über elastische Halterungen 4 mit dem plattenförmigen Trägerelement 2 verbunden ist. Das Trägerelement 2 ist gleichzeitig zur Aufnahme der vom elektronischen Regler zu der Spule 1 führenden Stromleiter geeignet. Damit ist sichergestellt, daß lediglich ein gemeinsamer elektrischer Leiterstrang für alle Spulen durch die Zwischenwand des Deckels 3 zum elektronischen Regler geführt werden muß, so daß unter weitgehender Beibehaltung des Grundaufbaues der Druckregelvorrichtung eine relativ einfache Anpassung an unterschiedliche Funktionsbelange gewährleistet ist. Damit können die erforderlichen Spulensätze sowie der elektronische Regler als Unterbaugruppen optimal an den jeweiligen Ventilblock angepaßt werden. Ferner können durch die vorbeschriebene stoffliche Verbindung zwischen dem Trägerelement und den Elementen des elektronischen Reglers diese in vorteilhafter Weise an die derzeitig praktizierten Fertigungstechniken angepaßt werden. Überdies lassen sich durch eine elastische oder gegebenenfalls auch plastische Anbindung der Spulen am Trägerelement die mechanische Beanspruchung, u.a. hervorgerufen durch thermomechanische Spannungen, minimieren.

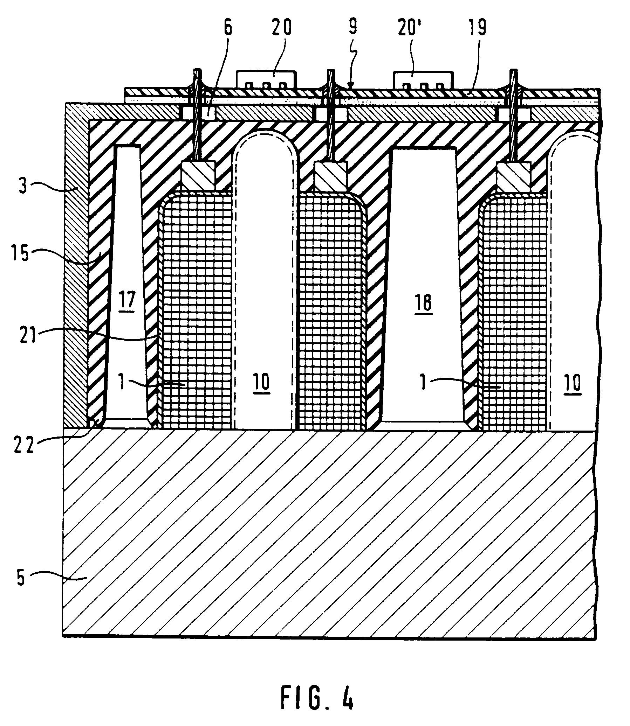

Die Druckregelvorrichtung nach Fig. 4 besteht im wesentlichen aus einem Ventilblock oder Ventilaufnahmekörper 5 und aus einem Deckel 3 oder Gehäuse. Aus diesem Ventilaufnahmekörper 5 ragen in bekannter Weise die einzelnen Ventildome 10, in denen sich die durch Magnetkraft beweglichen (nicht gezeigten) Ventilteile befinden, hervor. Ein derartiger Ventilblock für ein ABS mit radindividueller Regelung enthält im allgemeinen acht derartige Ventile, nämlich vier Einlaß- und vier Auslaßventile. Die Ventilbetätigungskraft wird bekanntlich durch ein Magnetfeld erzeugt, das von einer Spule 1 durch den Ventildom 10 hindurch auf nicht dargestellte, im Inneren des Ventildoms 10 angeordnete Ventilkörper einwirkt. Der Ventilblock 1 und die Ventildome 10 werden vorteilhafterweise aus Stahl hergestellt.

In dem Deckel 2 sind Spulen 1 mit Hilfe eines elastischen verformbaren Formkörpers 15 derart angeordnet und gehalten, daß sie beim Aufsetzen des Deckels 3 auf den Ventilblock 1 auf den zugehörigen Ventildome 10 und auf der Grundfläche des Ventilaufnahmekörpers 5 zur Auflage kommen. Mit Hilfe von flexiblen Anschlußdrähten, die durch Öffnungen 6 in der Wandung des Deckels 3 hindurchgeführt sind, sind die Spulen 1 mit einer Leiterplatte 19, die zu der Elektronik führt oder diesen insgesamt 9 bezeichneten elektronischen Regler trägt, verbunden. Symbolisch sind hier einige elektronische Bauteile 20,20' angedeutet. Die Elektronik ist wiederum, wie bekannt und daher hier nicht dargestellt, durch einen eigenen Deckel geschützt oder ist in einer Gießmasse eingebettet.

Die einzelnen Spulen 1 bestehen aus einer (nicht dargestellten) Wicklung und aus einem Stahlmantel 21, der den Verlauf der magnetischen Feldlinien beeinflußt. Für diesen Feldlinienverlauf ist es wichtigt, daß zwischen den Stirnflächen der Spulen 1 und der Auflagefläche, nämlich der Grundfläche des Ventilblocks, höchstens ein minimaler Luftspalt entsteht.

Der elastische Formkörper 15 wird derart ausgebildet und dimensioniert, daß an der Verbindungsstelle des Deckels 3 mit dem Ventilblock 1 eine Dichtlippe 22 entsteht, die nach dem Zusammenstecken der beiden Teile eine Abdichtung bewirkt. Zweckmäßigerweise ragen die Spulen 1 unter der Krafteinwirkung des elastischen Formkörpers 15 zunächst ein wenig über die Abschlußfläche des Deckels 3 hinaus, wodurch dann zwangsläufig nach dem Aufsetzen des Deckels 3 auf den Ventilblock und Befestigen eine Anpreßkraft entsteht, die auf den Ventilsitz zwischen den Stirnflächen der Spulen 1 und der Auflagefläche am Ventilblock wirkt.

Durch Hohlräume 17,18 in dem Ventilkörper läßt sich, wie leicht einzusehen ist, die Elastizität des Körpers in gewünschter Weise beeinflussen und außerdem eine Gewichts- oder Materialeinsparung erreichen.

Der elastische Formkörper 15 kann, wie bereits erwähnt wurde und was auch anschaulich ist, vorgefertigt und in den Deckel 3 vor dem Einsetzen der Ventilspulen 1 eingelegt werden. Andererseits ist es natürlich auch möglich, mit entsprechenden Hilfsvorrichtungen zunächst die Spulen in dem Deckel 3 zu Positionieren und danach den Formkörper 15 durch Eingießen einer geeigneten Masse in den Deckel 3 auszubilden.

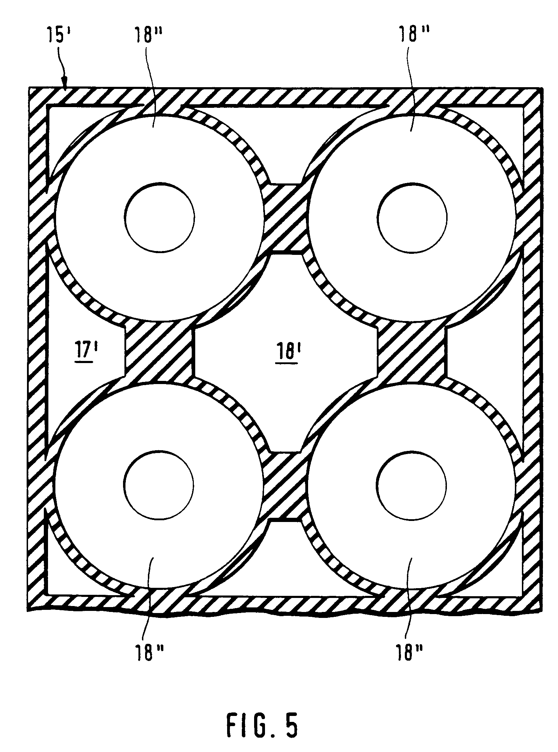

Fig. 5 zeigt ein Ausführungsbeispiel für einen vorgefertigten elastischen Formkörper 15' nach der Erfindung, wobei in diesem Fall eine dichtere Anordnung der Ventile und Ventilspulen auf dem Ventilaufnahmekörper im Vergleich zu der Ausbildung nach Fig. 4 vorgesehen ist.

Die Hohlräume 18'' dienen zur Aufnahme von (hier nicht dargestellten) Ventilspulen ähnlich den Spulen 1 in Fig. 4. Die Hohlräume 17',18' sind mit den Hohlräumen 17,18 in Fig. 4 vergleichbar. Durch die Elastizität oder definierter Plastizität des Materials werden Toleranzen bezüglich der Anordnung der einzelnen Ventildome (10 in Fig. 4) auf dem Ventilaufnahmekörper ausgeglichen. Ein solcher Formkörper ist, was keiner näheren Erläuterung bedarf, mit geringen Kosten herzustellen.

Dargestellt ist ein Formkörper für einen Ventilblock mit vier Ventildomen bzw. Ventilen. Nach dem gleichen Prinzip lassen sich jedoch auch Formkörper und "magnetische Stecker" für Ventilblöcke mit sechs, acht oder mit einer noch größeren Anzahl von Ventilen realisieren.

### Bezugszeichenliste

- 1: Spule
- 2: Trägerelement
- 3: Deckel
- 4: Halterung
- 5: Ventilaufnahmekörper
- 6: Öffnung
- 7: Kontaktelement
- 8: Abschirmung
- 9: elektronischer Regler
- 10: Ventildome
- 11: Steckeranschlüsse
- 12: Nasen
- 13: Federelement
- 14: Zwischenwand
- 15,15': Formkörper
- 16: elektrischer Anschluß
- 17,17': Hohlraum
- 18,18',18'': Hohlraum
- 19: Leiterplatte
- 20,20': elektronische Bauteile
- 21: Stahlmantel
- 22: Dichtlippe

## Patentansprüche

1. Elektrohydraulische Druckregelvorrichtung, insbesondere Bremsdruckregelvorrichtung, wie Antiblockierregelvorrichtung, Antriebsschlupfregelvorrichtung, bestehend aus einem oder mehreren elektromagnetisch betätigbaren Hydraulikventilen (Elektromagnetventilen), die blockförmig an einem Ventilaufnahmekörper (5) angeordnet sind, mit Spulen (1), die den Ventilaufnahmekörper (5) überragen, wobei die Spulen (1) an ihren den Ventilaufnahmekörper (5) überragenden Teilen mit Kontaktelementen (7) versehen sind, aus einem Deckel (3), der die überragenden Spulenteile und die Kontaktelemente (7) abdeckt, aus einem Trägerelement für Leiterbahnen, das innerhalb des Deckels (3) angeordnet ist, wobei der Deckel (3) oder ein Teil des Deckels als elektronischer Regler oder als Teil eines elektronischen Reglers ausgebildet ist, dadurch **gekennzeichnet**, daß die Spulen (1) von einer am Trägerelement (2) des Deckels (3) angeordneten elastischen Halterung (4) kraft- und/oder formschlüssig befestigt, gegenüber dem Ventilaufnahmekörper (5) beliebig ausrichtbar sind.

2. Elektrohydraulische Druckregelvorrichtung nach Anspruch 1, dadurch **gekennzeichnet**, daß das Trägerelement (2) mit Öffnungen (6) versehen ist, die von den hervorstehenden Kontaktelementen (7) der Spulen (1) durchdrungen sind.

3. Elektrohydraulische Druckregelvorrichtung nach Anspruch 1 oder 2, dadurch **gekennzeichnet**, daß der als Teil des Deckels (3) ausgebildete elektronische Regler (9) auf der den Spulen (1) abgewandten Seite des Trägerelementes (2) eine den elektromagnetischen Störfeldern entgegenwirkende Abschirmung (8) aufweist.

4. Elektrohydraulische Druckregelvorrichtung nach Anspruch 3, dadurch **gekennzeichnet**, daß die Abschirmung (8) als Abschirmplatte ausgebildet ist, die im Bereich des Trägerelementes (2) und des elektronischen Reglers (9) in paralleler Zwischenlage angeordnet ist.

5. Elektrohydraulische Druckregelvorrichtung nach einem oder mehreren der vorhergehenden Ansprüche, dadurch **gekennzeichnet**, daß die Halterungen (4) als Stopfbuchsen ausgeführt sind, die in die Öffnungen (6) des Trägerelementes (2) eingesetzt, die Kontaktelemente (7) der Spulen (1) reibschlüssig umgreifen.

6. Elektrohydraulische Druckregelvorrichtung nach einem der vorhergehenden Ansprüche 1 bis 3, dadurch **gekennzeichnet**, daß die Halterungen (4) als homogener Bestandteil des Trägerelementes (2) axial und radial verlagerbar an den Spulen (1) angreifen.

7. Elektrohydraulische Druckregelvorrichtung nach Anspruch 6, dadurch **gekennzeichnet**, daß die Halterungen (4) die zu den Spulen (1) führenden elektrischen Stromleiter aufnehmen.

8. Elektrohydraulische Druckregelvorrichtung nach Anspruch 1, dadurch **gekennzeichnet**, daß die Halterung (4) aus einzelnen, zumindest paarweise an den Spulen (1) angreifenden Federelementen besteht, die am Trägerelement (2) vorzugsweise auswechselbar gehalten sind.

9. Elektrohydraulische Druckregelvorrichtung, bestehend im wesentlichen aus elektromagnetisch betätigbaren, in separaten Ventildome (10) eingefügten Hydraulikventilen, die nebeneinander auf einem Ventilaufnahmekörper (5) angeordnet zu einem Ventilblock zusammengefaßt sind, und aus auf die einzelnen Ventildome (10) aufschiebbaren Spulen, die in einem gemeinsamen, auf den Ventilaufnahmekörper (5) aufsetzbaren Gehäuse bzw. Deckel (3) angeordnet sind und elektrisch mit einer außerhalb des Gehäuses, beispielsweise auf der Gehäusewandung aufgebrachten elektronischen Schaltung in Verbindung stehen, dadurch **gekennzeichnet**, daß die Spulen (1) im Deckel (3) mit Hilfe eines elastischen Formkörpers (15,15') oder einer elastischen Masse in einer der Ventilanordnung entsprechenden Weise positioniert und gehalten sind.

10. Elektrohydraulische Druckregelvorrichtung nach mindestens einem der vorhergehenden Ansprüche, dadurch **gekennzeichnet**, daß die einzelnen Spulen (1) nach dem Zusammenfügen des Deckels (3) und des Ventilaufnahmekörpers (5) die zugehörigen Ventildome (10) umgeben und mit einer Stirnseite auf der Grundfläche des Ventilaufnahmekörpers (5) aufliegen.

11. Elektrohydraulische Druckregelvorrichtung nach Anspruch 9, dadurch **gekennzeichnet**, daß der elastische Formkörper (15,15') oder die elastische Masse derart ausgebildet sind, daß eine Abdichtung zwischen dem Deckelrand und dem Ventilaufnahmekörper (5) entsteht und eine Anpreßkraft hervorgerufen wird, die auf den Sitz der Spule (1) auf dem Ventilaufnahmekörper (5) wirkt.

12. Elektrohydraulische Druckregelvorrichtung nach einem oder mehreren der Ansprüche 9 bis 11, dadurch **gekennzeichnet**, daß der elastische Formkörper (15,15') vorgefertigt ist und vor dem Einsetzen der Spulen (1) in den Deckel (3) einsetzbar ist.

13. Elektrohydraulische Druckregelvorrichtung nach einem oder mehreren der Ansprüche 9 bis 12, dadurch **gekennzeichnet**, daß der Formkörper (15,15') mit Hohlräumen (17,17',18,18') versehen ist.

14. Elektrohydraulische Druckregelvorrichtung nach einem der vorangegangenen Ansprüche, dadurch **gekennzeichnet**, daß der die Spulen (1) im Deckel (3) umschließende Formkörper (15, 15') in einer definierten Schichtdicke verformbar ist.

15. Verfahren zur Herstellung einer elektrohydraulischen Druckregelvorrichtung nach einem oder mehreren der vorhergehenden Ansprüche 9 bis 14, dadurch **gekennzeichnet**, daß mit einer Hilfsvorrichtung die Spulen (1) in dem Deckel (3) positioniert, gehalten und mit nach außen führenden elektrischen Anschlüssen (16) versehen werden und daß dann eine Masse zur Ausbildung des Formkörpers (15,15') eingegossen wird.

## Claims

1. An electrohydraulic pressure control device, in particular a braking pressure control device such as an anti-lock control device or a traction slip control device, consisting of one or several electromagnetically operable hydraulic valves (solenoid valves) arranged in a block-shaped manner on a valve accommodating body (5) and having coils (1) projecting over the top of the valve accommodating body (5), with the coils (1) being provided with contact elements (7) on their parts which project over the top of the valve accommodating body (5), a cover (3) covering the projecting coil parts and the contact elements (7) and a carrier element for electric conductors which is arranged within the cover (3), with the cover (3) or part of the cover being designed as an electronic control unit or as part of an electronic control unit, **characterized** in that the coils (1), fastened in frictional and/or positive engagement by means of an elastic holding device (4) arranged on the carrier element (2) of the cover (3), can be aligned at will in respect of the valve accommodating body (5).

2. An electrohydraulic pressure control device as claimed in claim 1,
**characterized** in that the carrier element (2) is provided with openings (6) penetrated by the protruding contact elements (7) of the coils (1).

3. An electrohydraulic pressure control device as claimed in claim 1 or in claim 2, **characterized** in that, on the side of the carrier element (2) which is averted from the coils (1), the electronic control unit (9) designed as part of the cover (3) has a shield (8) counteracting the electromagnetic noise fields.

4. An electrohydraulic pressure control device as claimed in claim 3, **characterized** in that the shield (8) is designed as a shield plate arranged in a parallel intermediate position in the area of the carrier element (2) and of the electronic control unit (9).

5. An electrohydraulic pressure control device as claimed in one or in several of the preceding claims,
**characterized** in that the holding devices (4) have the design of stuffing boxes which, inserted into the openings (6) of the carrier element (2), embrace the contact elements (7) of the coils (1) in a frictionally engaged manner.

6. An electrohydraulic pressure control device as claimed in any one of the preceding claims 1 through 3,
**characterized** in that the holding devices (4), as a homogeneous component of the carrier element (2) act on the coils (1) in an axially and radially displaceable manner.

7. An electrohydraulic pressure control device as claimed in claim 6, **characterized** in that the holding devices (4) accommodate the electric current conductors leading to the coils (1).

8. An electrohydraulic pressure control device as claimed in claim 1,
**characterized** in that the holding device (4) consists of individual spring elements acting at least in pairs on the coils (1) and preferably held on the carrier element (2) so as to be exchangeable.

9. An electrohydraulic pressure control device essentially consisting of electromagnetically operable hydraulic valves which are inserted into separate valve domes (10) and which, being arranged side by side on a valve accommodating body (5), are combined in one valve block, and coils slippable onto the individual valve domes (10) and arranged in a common housing or cover (3), which is mountable onto the valve accommodating body (5), the coils being electrically connected with an electronic circuitry provided outside the housing, for example, on the housing wall,
**characterized** in that an elastic moulded structure (15, 15') or an elastic compound positions and holds the coils (1) in the cover (3) in a way that corresponds to the valve arrangement.

10. An electrohydraulic pressure control device as claimed in at least one of the preceding claims,
**characterized** in that the individual coils (1) surround the appertaining valve domes (10) and rest with one front face on the base surface of the valve accommodating body (5) after the cover (3) and the valve accommodating body (5) have been mounted together.

11. An electrohydraulic pressure control device as claimed in claim 9, **characterized** in that the elastic moulded structure (15, 15') or the elastic compound are designed such that a sealing is formed between the cover edge and the valve accommodating body (5) and a contact force is produced which acts on the seat of the coil (1) on the valve accommodating body (5).

12. An electrohydraulic pressure control device as claimed in one or in several of claims 9 through 11,
**characterized** in that the elastic moulded structure (15, 15') is prefabricated and can be inserted into the cover (3) before inserting the coils (1).

13. An electrohydraulic pressure control device as claimed in one or in several of claims 9 through 12,
**characterized** in that the moulded structure (15, 15') is provided with hollow spaces (17, 17', 18, 18').

14. An electrohydraulic pressure control device as claimed in any one of the preceding claims,
**characterized** in that the moulded structure (15, 15') enclosing the coils (1) in the cover (3) is deformable within a defined layer thickness.

15. A method of manufacturing an electrohydraulic pressure control device as claimed in one or in several of the preceding claims 9 through 14;
**characterized** in that, by means of an auxiliary device, the coils (1) are positioned and held in the cover (3) and are provided with electric attachments (16) leading outside and in that, subsequently, a compound is poured in so as to form the moulded structure (15, 15').

## Revendications

1. Dispositif électrohydraulique de régulation de pression, notamment dispositif de régulation de la pression de freinage, comme par exemple un dispositif de régulation anti-blocage, un dispositif de régulation du glissement d'entraînement, constitué par une ou plusieurs soupapes hydrauliques pouvant être actionnées par voie électromagnétique (soupapes électromagnétiques), qui sont disposées sous la forme d'un bloc sur un corps (5) de logement de soupapes, comportant des bobines (1), qui font saillie par rapport au corps (5) de logement des soupapes et qui comportent des éléments de contact (7) sur leurs parties qui font saillie hors du corps (5) de logement des soupapes, par un couvercle (3), qui recouvre les éléments saillants des bobines et les éléments de contact (7), et par un élément de support pour des voies conductrices, qui est disposé à l'intérieur du couvercle (3), le couvercle (3) ou une partie du couvercle étant réalisé sous la forme d'un régulateur électronique ou sous la forme d'une partie d'un régulateur électronique, caractérisé en ce que les bobines (1) sont fixées selon une liaison de force et/ou une liaison par formes complémentaires, au moyen d'un support élastique (4), qui est disposé sur l'élément de support (2) du couvercle (3) et peut être aligné à volonté par rapport au corps (5) de logement des soupapes.

2. Dispositif électrohydraulique de régulation de pression selon la revendication 1, caractérisé en ce que l'élément de support (2) comporte des ouvertures (6), qui sont traversées par les éléments de contact saillants (7) des bobines (1).

3. Dispositif électrohydraulique de régulation de pression selon la revendication 1 ou 2, caractérisé en ce que le régulateur électronique (9) réalisé sous la forme d'une partie du couvercle (3) possède, sur le côté de l'élément de support (2) tourné à l'opposé des bobines (1), un blindage (8) s'opposant aux champs électromagnétiques parasites.

4. Dispositif électrohydraulique de régulation de pression selon la revendication 3, caractérisé en ce que le blindage (8) est réalisé sous la forme d'une plaque de blindage qui est disposée dans une position intermédiaire parallèle au voisinage de l'élément de support (2) et du régulateur électronique (4).

5. Dispositif électrohydraulique de régulation de pression selon une ou plusieurs des revendications précédentes, caractérisé en ce que les supports (4) sont réalisés sous la forme de manchons de fermeture, qui sont insérés dans les ouvertures (6) de l'élément de support (2) et enserrent selon une liaison par friction les éléments de contact (7) des bobines (1).

6. Dispositif électrohydraulique de régulation de pression selon l'une des revendications précédentes 1 à 3, caractérisé en ce que les soupapes (4) en tant que composant homogène de l'élément de support (2) attaquent les bobines (1), en étant déplaçables axialement et radialement.

7. Dispositif électrohydraulique de régulation de pression selon la revendication 6, caractérisé en ce que les supports (4) logent les conducteurs électriques de courant aboutissant aux bobines (1).

8. Dispositif électrohydraulique de régulation de pression selon la revendication 1, caractérisé en ce que le support (4) est constitué par des éléments de ressorts individuels qui attaquent au moins par couple les bobines (1) et sont retenus, de préférence d'une manière remplaçable, sur l'élément de support (2).

9. Dispositif électrohydraulique de régulation de pression, constitué essentiellement par des soupapes hydrauliques pouvant être actionnées par voie électromagnétique, insérées dans des dômes séparés de soupapes (10) et réunies pour former un bloc de soupapes en étant disposées côte-à-côte sur un corps (5) de logement des soupapes, et par des bobines, qui peuvent être emmanchées sur les différents dômes de soupapes (10), sont disposées dans un boîtier ou un couvercle commun (3) pouvant être mis en place sur le corps (5) de logement des soupapes,et sont reliés électriquement à un circuit électronique disposé à l'extérieur du boîtier, par exemple sur la paroi du boîtier, caractérisé en ce que les bobines (1) sont positionnées et retenues dans le couvercle (3) à l'aide d'un corps moulé élastique (15, 15') ou d'une masse élastique, d'une manière qui correspond à l'agencement des soupapes.

10. Dispositif électrohydraulique de régulation de pression selon au moins l'une des revendications précédentes, caractérisé en ce qu'après la réunion du couvercle (3) et du corps (5) de logement des soupapes, les différentes soupapes (1) sont entourées par le dôme de soupape associé (10) et s'appliquent par une face frontale sur la surface de base du corps (5) de logement des soupapes.

11. Dispositif électrohydraulique de régulation de pression selon la revendication 9, caractérisé en ce que le corps moulé élastique (15, 15') ou la masse élastique est agencé de telle sorte qu'on obtient une étanchéité entre le bord du couvercle et le corps (5) de logement des soupapes et qu'il apparaît une force de serrage qui agit sur l'appui de la bobine (1) sur le corps (5) de logement des soupapes.

12. Dispositif électrohydraulique de régulation de pression selon une ou plusieurs des revendications 9 à 11, caractérisé en ce que le corps moulé élastique (15, 15') est préfabriqué et peut être inséré dans le couvercle (3) avant l'insertion des bobines (1).

13. Dispositif électrohydraulique de régulation de pression selon une ou plusieurs des revendications 9 à 12, caractérisé en ce que le corps moulé (15, 15') comporte des cavités (17, 17', 18, 18').

14. Dispositif électrohydraulique de régulation de pression selon l'une des revendications précédentes, caractérisé en ce que le corps moulé (15, 15'), qui entoure les bobines (1) situées dans le couvercle (3), peut être déformé sur une épaisseur de couche définie.

15. Procédé pour fabriquer un dispositif électrohydraulique de régulation de pression selon une ou plusieurs des revendications précédentes 9 à 14, caractérisé en ce qu'à l'aide d'un dispositif auxiliaire on positionne et on retire les bobines (1) dans le couvercle (3) et on les équipe de bornes électriques ressorties (16), et qu'on coule ensuite une masse servant à former le corps moulé (15, 15').
